# EUROPEAN PATENT SPECIFICATION

(11) **EP 3 903 049 B1**
(45) Date of publication and mention of the grant of the patent: **12.07.2023**
(21) Application number: 19813519.6
(22) Date of filing: 03.12.2019
(51) Int. Cl.: F25D 21/00, F25D 11/02

(54) **A COOLING DEVICE WITH REDUCED ENERGY CONSUMPTION**
EIN KÜHLGERÄT MIT REDUZIERTEM ENERGIEVERBRAUCH
DISPOSITIF DE REFROIDISSEMENT À CONSOMMATION D'ÉNERGIE RÉDUITE

(30) Priority: 25.12.2018 TR 201820420
(43) Date of publication of application: 03.11.2021
(73) Proprietor: Arçelik Anonim Sirketi, 34445 Istanbul (TR)
(72) Inventor: SARICAY, Tugba, 34950 ISTANBUL (TR); ERCAN, Turgay, 34950 ISTANBUL (TR)
(86) International application number: PCT/EP2019/083495
(87) International publication number: WO 2020/135979

(56) References cited:
- EP-A1- 3 338 041
- EP-A2- 0 383 222
- EP-A2- 0 987 507
- EP-B1- 3 338 041
- JP-A- H11 304 344

## Description

The present invention relates to a cooling device with reduced energy consumption.

Since the evaporator in the cooling devices has the coldest surface in the compartment, the humid air in the environment causes frost formation on the evaporator surface. For the efficiency of the cooling performance of the cooling device, the frost accumulating on the surface of the evaporator must be periodically melted by the defrost process. Today, the intervals at which the defrost process is performed are generally determined by the operating time of the compressor or the fixed times determined by the producer.

Recently, different types of evaporators have been used in the cooling devices to cool both the fresh food compartment wherein foodstuffs are stored and the freezing compartment wherein foodstuffs are stored by freezing. In such cooling devices, since the opening frequency of the doors, which provide access to the fresh food compartment and the freezing compartment, is different, the fresh food compartment evaporator generally accumulates frost faster than the freezing compartment evaporator. Therefore, in the high humidity environment, when the fresh food compartment door is opened frequently, there is no blockage due to frost in the freezing compartment evaporator, while the fresh food compartment evaporator accumulates frost before the fixed defrost time determined by the producer, and the cooling performance decreases. For example, if the defrost process interval is set to eight hours by the producer, the fresh food compartment evaporator may accumulate frost within four to five hours, especially in humid environments and in use where the fresh food compartment door is frequently opened and closed, while the freezing compartment evaporator does not accumulate frost. In such cases, the compressor is unnecessarily operated to cool the interior of the fresh food compartment since the cooling capacity of the fresh food compartment evaporator reduces or falls to zero due to frost accumulation thereon. In this case, both the interior of the fresh food compartment cannot be cooled with the desired capacity and the energy consumption of the cooling device increases due to the operation of the compressor. To avoid this problem, the producers may fix the defrost interval to be less than five hours instead of, for example, eight hours. However, in this case, since there would be no frost formation in the fresh food compartment evaporator when the door of the fresh food compartment is not opened frequently, defrost process would be carried out unnecessarily, thus increasing the energy consumption of the cooling device.

In the state of the art European Patent Document No. EP1730457, a cooling device is disclosed, wherein the defrost process is carried out less than normal, thus decreasing the energy consumption. Doument EP 0 987 507 A2 is considered as the closest prior art. Documents JP H11 304344 A and EP 3 338 041 A1 also disclose relevant prior art.

The aim of the present invention is the realization of a cooling device wherein the correct defrost time is determined at least depending on the cooling capacity in the fresh food compartment during the cooling cycle, thus decreasing the energy consumption.

The cooling device with reduced energy consumption realized in order to attain the aim of the present invention, explicated in the first claim and the respective claims thereof, comprises a control unit which is configured to operate at least one defrost unit to start the defrost process if the cooling capacity in the fresh food compartment during the cooling cycle is less than a predetermined threshold cooling capacity value and if the temperature detected by a second temperature sensor for measuring the temperature of the freezing compartment is less than a lower temperature value determined by the producer as a limit to stop the compressor, hence the cooling cycle. When the control unit detects that the fresh food compartment evaporator cannot carry out an efficient cooling process in the fresh food compartment while the freezing compartment evaporator carries out an efficient cooling process in the freezing compartment, it is decided that the there is frost accumulation on the fresh food compartment evaporator, and thus the defrost process is started at least to remove the frost accumulated on the fresh food compartment evaporator. Consequently, although the desired cooling cannot be realized in the fresh food compartment during the cooling cycle, the compressor is prevented from being operated and the energy which would be consumed to continue operating the compressor is saved.

In the present invention, the control unit is configured to calculate the cooling capacity depending on the decrease in temperature in the fresh food compartment after the compressor is operated for a certain period of time. In this embodiment of the present invention, predetermined data related to the decrease in temperature of the fresh food compartment under normal conditions, in other words in case the compressor is operated for a certain period of time when there is no frost accumulation on the fresh food compartment evaporator is recorded in the control unit. By using the fresh food compartment temperature value detected by the first temperature sensor for measuring the temperature of the interior of the fresh food compartment after the compressor is operated for said period of time, the control unit calculates the decrease in temperature of the fresh food compartment after the compressor starts operating. Then, the control unit compares the calculated decrease in temperature with the decrease in temperature recorded therein to decide whether the cooling capacity in the fresh food compartment is sufficient or not.

In an embodiment of the present invention, the cooling device of the present invention comprises at least one third temperature sensor configured to measure the temperature of the fresh food compartment evaporator, and the control unit is configured to activate at least one defrost unit to start the defrost process if the temperature detected by the third temperature sensor is lower than the predetermined fresh food compartment evaporator temperature in normal conditions, in other words when there is no frost accumulation on the fresh food compartment evaporator after it is detected that the cooling capacity in the fresh food compartment is less than a predetermined threshold cooling capacity value. In this embodiment, as an additional step, if it is detected that preferably the surface temperature of the fresh food compartment evaporator measured by the third temperature sensor is lower than what it should be during the normal operation of the compressor after it is detected that the cooling process in the fresh food compartment during the cooling cycle is inefFicient and the cooling process in the freezing compartment is efficient and before the decision of starting the defrost process is taken, it is decided that in fact the compressor carries out its function, but the fresh food compartment evaporator cannot carry out an efficient cooling process in the fresh food compartment, which is also interpreted as the presence of frost accumulation on the fresh food compartment evaporator. Thus, by means of this additional control step carried out by the control unit, it is ensured that there is frost accumulation on the fresh food compartment evaporator, and the risk of starting the defrost process, which relatively consumes high amount of energy, at an unnecessary time, is minimized.

In an embodiment of the present invention, after it is detected that the cooling capacity in the fresh food compartment during the cooling cycle is lower than the threshold cooling capacity and the actual temperature value of the freezing compartment is lower than the lower temperature value determined for the freezing compartment to stop the compressor and/or the surface temperature of the fresh food compartment evaporator is lower than a predetermined temperature, the control unit is further configured to calculate the time elapsed since the previous defrost process, to compare the calculated time with a predetermined threshold time recorded therein and at least to activate the defrost unit to start the defrost process if it is detected that the time calculated as a result of the comparison process is higher than the recorded time. Thus, by preventing the start of a new defrost process unless a predetermined time elapses since the previous defrost process, the risk of frequently carrying out the defrost process, which relatively consumes high amount of energy is eliminated, thus preventing consumption of high amount of energy.

By means of the present invention, if it is detected that the cooling capacity, in other words the cooling rate, of the cooling process in the fresh food compartment during the cooling cycle is lower than a predetermined threshold cooling capacity, in other words cooling rate and if it is also detected that an efficient cooling process is being carried out at least in the freezing compartment, it is decided that there is frost accumulation on the fresh food compartment evaporator, and the defrost process is started at least to remove the frost accumulated on the fresh food compartment evaporator. Thus, by preventing the continuation of the cooling cycle when an efficient cooling process cannot be carried out in the fresh food compartment, the energy which would be consumed by the compressor during the cooling cycle is saved. Furthermore, by means of the present invention, the time elapsed since the previous defrost process calculate before starting the defrost process and if the calculated time is lower than a predetermined threshold time, the defrost process is not started. Thus, the risk of frequently carrying out the defrost process, which relatively consumes high amount of energy, is eliminated, preventing the consumption of high amount of energy.

The cooling device realized in order to attain the aim of the present invention is illustrated in the attached figure, where:

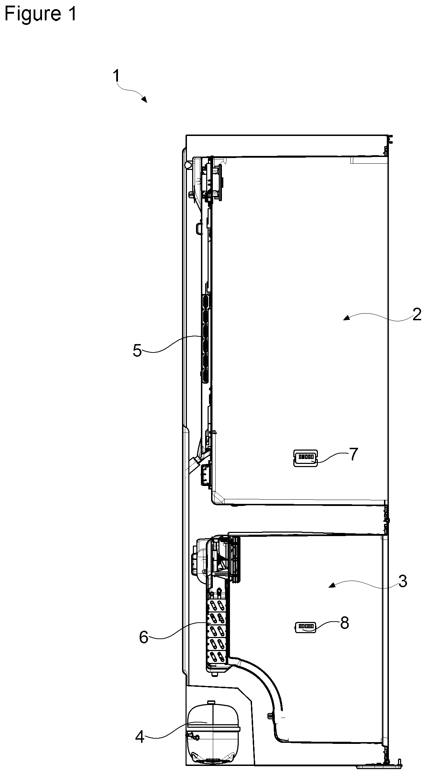

Figure 1 - is the schematic view of the cooling device of the present invention.

The elements illustrated in the figures are numbered as follows:
1. Cooling device
2. Fresh food compartment
3. Freezing compartment
4. Compressor
5. Fresh food compartment evaporator
6. Freezing compartment evaporator
7. First temperature sensor
8. Second temperature sensor

The cooling device (1) comprises at least one fresh food compartment (2) where foodstuffs and beverages are stored; at least one freezing compartment (3) wherein foodstuffs are stored by freezing; at least one compressor (4) which carries out the cooling cycle; at least one fresh food compartment evaporator (5) which cools down the interior of the fresh food compartment (2) during the cooling cycle; at least one freezing compartment evaporator (6) which cools down the interior of the freezing compartment (3) during the cooling cycle; at least one first temperature sensor (7) which detects the temperature of the interior of the fresh food compartment (2); at least one second temperature sensor (8) which detects the temperature of the interior of the freezing compartment (3); and at least one defrost unit (not shown in figures) which is connected both to the fresh food compartment evaporator (5) and the freezing compartment evaporator (6) and which carries out the defrost process by removing the defrost accumulated on the fresh food compartment evaporator (5) and the freezing compartment evaporator (6); and at least one control unit (not shown in figures) which controls the cooling cycle and the defrost cycle. In the cooling device (1), the foodstuffs to be cooled are stored in the fresh food compartment (2) while the foodstuffs such as meat, frozen food, etc. to be frozen to keep their freshness for a long time are stored in the freezing compartment (3). In order to keep the temperatures of the fresh food compartment (2) and the freezing compartment (3) at the desired levels, the control unit at least controls the operation of the compressor (4) and hence the cooling cycle depending on the temperature values received from the first temperature sensor (7) and the second temperature sensor (8) as well as an upper temperature value for activating the compressor (4) and a lower temperature value for deactivating the compressor (4) which are preferably separately determined for the fresh food compartment (2) and the freezing compartment (3) by the producer. In the cooling device (1), in order to start the cooling cycle, the temperature of the fresh food compartment (2) detected by the first temperature sensor (7) and the temperature of the freezing compartment (3) detected by the second temperature sensor (8) must reach the upper temperature values determined by the producer. Similarly, in order to end the cooling cycle, the temperature of the fresh food compartment (2) detected by the first temperature sensor (7) and the temperature of the freezing compartment (3) detected by the second temperature sensor (8) must reach the lower temperature values determined by the producer. During the cooling cycle, the interior of the fresh food compartment (2) is cooled down by the fresh food compartment evaporator (5) and the interior of the freezing compartment (3) is cooled down by the freezing compartment evaporator (6). The control unit is further configured to check if certain conditions are met, and if said conditions are met, activates a defrost unit, which is for example a heater, so as to carry out the defrost process by removing the frost accumulated on the fresh food compartment evaporator (5) and the freezing compartment evaporator (6).

The control unit provided in the cooling device (1) of the present invention is configured to compare the cooling capacity in the fresh food compartment (2) with a predetermined threshold cooling capacity at certain intervals, to compare the temperature detected by the second temperature sensor (8) with the lower temperature value determined for the freezing compartment (3) by the producer to stop the compressor (4) if the cooling capacity in the fresh food compartment (2) is detected to be lower than the threshold cooling capacity as a result of the comparison and at least to activate the defrost unit to start the defrost process if it is detected that the temperature value detected by the second temperature sensor (8) is lower than the lower temperature value determined by the producer for the freezing compartment (3) as a result of the comparison. If the control unit detects that the cooling capacity in the fresh food compartment (2) during the cooling cycle is lower than predetermined threshold cooling capacity, it is decided that no efficient cooling process is being carried out in the fresh food compartment (2). If the actual temperature value of the freezing compartment (3) detected by the second temperature sensor (8) is lower than the lower temperature value determined for the freezing compartment (3) to stop the compressor (4) when no efficient cooling process is being carried out in the fresh food compartment (2), in order words if the interior of the freezing compartment (3) is detected to be efFiciently cooled, it is decided that the fresh food compartment evaporator (5) cannot carry out an efficient cooling process due to the frost accumulated thereon. Therefore, the control activates the defrost unit to start the defrost process particularly to remove the frost accumulated on the fresh food compartment evaporator (5). Thus, by starting the defrost process, the risk of continuing to operate the compressor (4) even though the desired cooling process cannot be carried out in the fresh food compartment (2) due to the defrost accumulated on the fresh food compartment evaporator (5) is eliminated, preventing the compressor (4) from consuming unnecessary energy.

In the present invention, the control unit calculates the cooling capacity in the fresh food compartment (2) depending on the decrease in temperature in the fresh food compartment (2) after the compressor (4) is operated for a certain time. In this embodiment, data related to the expected temperature difference in the fresh food compartment (2) under normal conditions at least depending on the operating time of the compressor (4), in other words when there is no frost accumulation on the fresh food compartment evaporator (5), is recorded in the control unit. The control unit calculates the decrease in temperature in the fresh food compartment (2) depending on the temperature values of the fresh food compartment (2) detected by the first temperature sensor (7) after the compressor (4) is operated for a certain period of time, and compares said calculated value with the values in the prerecorded data. If the control unit detects that the decrease in temperature in the fresh food compartment (2) after the compressor (4) is operated for a certain period of time is lower than the temperature difference value provided in the data recorded therein, it is decided that no efficient cooling process is being carried out in the fresh food compartment (2) and the cooling capacity is lower than a predetermined threshold cooling capacity.

In an embodiment of the present invention, the cooling device (1) further comprises at least one third temperature sensor (not shown in figures) for measuring the temperature of the fresh food compartment evaporator (5), and the control unit is configured to compare the temperature detected by the third temperature sensor with a predetermined temperature value after it is detected that the cooling capacity in the fresh food compartment (2) is less than the threshold cooling capacity, and to activate at least the defrost unit to start the defrost process if it is detected that the temperature detected by the third temperature sensor is lower than the predetermined temperature as a result of the comparison. In this embodiment, if it is detected that the surface temperature of the fresh food compartment evaporator (5) is lower than the expected temperature during the normal operation of the compressor (4), it is in fact decided that the compressor (4) properly functions, but the fresh food compartment evaporator (5) cannot carry out an efficient cooling process in the fresh food compartment (2). Accordingly, it is decided that frost is accumulated on the fresh food compartment evaporator (5) and the control unit activates the defrost unit to start the defrost process. Thus, since the control unit decides to start the defrost process depending on the actual temperature in the freezing compartment (3) and the actual temperature of the fresh food compartment evaporator (5) after the cooling capacity of the fresh food compartment (2) is lower than the threshold cooling capacity, the risk of starting the defrost process at a wrong time is minimized.

In an embodiment of the present invention, after it is detected that the cooling capacity in the fresh food compartment (2) is lower than the threshold cooling capacity and the actual temperature value of the freezing compartment (3) detected by the second temperature sensor (8) is lower than the lower temperature value determined for the freezing compartment (3) to stop the compressor (4) and/or the temperature detected by the third temperature sensor (8) is lower than the predetermined temperature, the control unit is further configured to calculate the time elapsed since the previous defrost process, to compare the calculated time with a predetermined threshold time recorded therein and at least to activate the defrost unit to start the defrost process if it is detected that the time calculated as a result of the comparison process is higher than the recorded time. Thus, by preventing the start of a new defrost process unless a predetermined time elapses since the previous defrost process, the risk of frequently carrying out the defrost process, which relatively consumes high amount of energy is eliminated, thus preventing consumption of high amount of energy.

By means of the present invention, if it is detected that the cooling capacity of the cooling process in the fresh food compartment (2) during the cooling cycle is lower than a predetermined threshold cooling capacity and if it is also detected that an efficient cooling process is being carried out at least in the freezing compartment (3), it is decided that there is frost accumulation on the fresh food compartment evaporator (5), and the defrost process is started at least to remove the frost accumulated on the fresh food compartment evaporator (5). Thus, by preventing the continuation of the cooling cycle when an efficient cooling process cannot be carried out in the fresh food compartment (2), the energy which would be consumed by the compressor (4) during the cooling cycle is saved. Furthermore, by means of the present invention, the time elapsed since the previous defrost process calculate before starting the defrost process and if the calculated time is lower than a predetermined threshold time, the defrost process is not started. Thus, the risk of frequently carrying out the defrost process, which relatively consumes high amount of energy, is eliminated, preventing the consumption of high amount of energy.

## Claims

1. A cooling device (1) **comprising** at least one fresh food compartment (2) where foodstuffs and beverages are stored; at least one freezing compartment (3) wherein foodstuffs are stored by freezing; at least one compressor (4) which carries out a cooling cycle; at least one fresh food compartment evaporator (5) which cools down the interior of the fresh food compartment (2) during the cooling cycle; at least one freezing compartment evaporator (6) which cools down the interior of the freezing compartment (3) during the cooling cycle; at least one first temperature sensor (7) which detects the temperature of the interior of the fresh food compartment (2); at least one second temperature sensor (8) which detects the temperature of the interior of the freezing compartment (3); and at least one defrost unit which is connected both to the fresh food compartment evaporator (5) and the freezing compartment evaporator (6) and which carries out a defrost process by removing the frost accumulated on the fresh food compartment evaporator (5) and the freezing compartment evaporator (6); and at least one control unit which controls the cooling cycle and the defrost cycle, **characterized by** the control unit which is configured to calculate a cooling capacity depending on the decrease in temperature in the fresh food compartment after the compressor is operated for a certain period of time and compare the cooling capacity in the fresh food compartment (2) with a predetermined threshold cooling capacity at certain intervals, to compare the temperature detected by the second temperature sensor (8) with a lower temperature value determined for the freezing compartment (3) by the producer to stop the compressor (4) if the cooling capacity in the fresh food compartment (2) is detected to be lower than the threshold cooling capacity as a result of the comparison and at least to activate the defrost unit to start the defrost process if it is detected that the temperature value detected by the second temperature sensor (8) is lower than the lower temperature value determined by the producer for the freezing compartment (3) as a result of the comparison.

2. A cooling device (1) as in Claim 1, **characterized by** at least one third temperature sensor for measuring the temperature of the fresh food compartment evaporator (5), and the control unit which is configured to compare the temperature detected by the third temperature sensor with a predetermined temperature value after it is detected that the cooling capacity in the fresh food compartment (2) is less than the threshold cooling capacity, and to activate at least the defrost unit to start the defrost process if it is detected that the temperature detected by the third temperature sensor is lower than the predetermined temperature as a result of the comparison.

3. A cooling device (1) as in Claim 2, **characterized by** the control unit which is configured to, after it is detected that the cooling capacity in the fresh food compartment (2) is lower than the threshold cooling capacity and the actual temperature value of the freezing compartment (3) detected by the second temperature sensor (8) is lower than the lower temperature value determined for the freezing compartment (3) to stop the compressor (4) and/or the temperature detected by the third temperature sensor (8) is lower than the predetermined temperature, calculate the time elapsed since the previous defrost process, to compare the calculated time with a predetermined threshold time recorded therein and at least to activate the defrost unit to start the defrost process if it is detected that the time calculated as a result of the comparison process is higher than the recorded time.

## Patentansprüche

1. Ein Kühlgerät (1) **umfasst** mindestens einem Frischhaltefach (2), in dem Lebensmittel und Getränke gelagert werden; mindestens ein Gefrierfach (3), in dem Lebensmittel durch Gefrieren gelagert werden; mindestens einen Kompressor (4), der einen Kühlkreislauf durchführt, mindestens einen Frischhaltefach-Verdampfer (5), der das Innere des Frischhaltefachs (2) während des Kühlzyklus abkühlt; mindestens einen Gefrierfachverdampfer (6), der das Innere des Gefrierfachs (3) während des Kühlkreislaufs herunterkühlt; mindestens einen ersten Temperatursensor (7), der die Temperatur des Innenraums des Frischhaltefachs (2) erfasst; mindestens einen zweiten Temperatursensor (8), der die Temperatur des Innenraums des Gefrierfachs (3) erfasst; und mindestens eine sowohl mit dem Frischhaltefach-Verdampfer (5) als auch mit dem Gefrierfach-Verdampfer (6) verbundene Abtaueinheit, die einen Abtauvorgang durchführt, indem sie das auf dem Frischhaltefach-Verdampfer (5) angesammelte Reif und das Gefrierfachverdampfer (6) entfernt; und mindestens eine Steuereinheit, die den Kühlzyklus und den Abtauzyklus steuert; **gekennzeichnet ist dadurch,** dass die Steuereinheit, die konfiguriert ist, eine Kühlkapazität abhängig von der Temperaturabnahme in dem Frischhaltefach zu berechnen, nachdem der Kompressor für eine bestimmte Zeitdauer betrieben wurde, und die Kühlkapazität in dem Frischhaltefach (2) mit einer vorbestimmten Schwellenkühlleistung in bestimmten Intervallen vergleicht, um die vom zweiten Temperatursensor (8) erfasste Temperatur mit einem vom Hersteller für das Gefrierfach (3) ermittelten niedrigeren Temperaturwert zu vergleichen, den Kompressor (4) anzuhalten, wenn die Kühlleistung im Frischhaltefach (2) als Ergebnis des Vergleichs kleiner als die Schwellenkühlleistung erfasst wird und zumindest die Abtaueinheit zum Starten des Abtauvorgangs zu aktivieren, wenn erfasst wird, dass der vom zweiten Temperatursensor (8) erfasste Temperaturwert niedriger ist als der vom Hersteller ermittelte untere Temperaturwert für das Gefrierfach (3) als das Ergebnis des Vergleichs.

2. Ein Kühlgerät (1), wie in Anspruch 1 aufgeführt, **ist dadurch gekennzeichnet, dass** mindestens ein dritter Temperatursensor zur Messung der Temperatur des Frischhaltefach-Verdampfers (5), und die Steuereinheit, die so konfiguriert ist, dass sie die von dem dritten Temperatursensor erfasste Temperatur mit einem vorbestimmten Temperaturwert vergleicht, nachdem erfasst wird, dass die Kühlkapazität in dem Fach für frische Lebensmittel (2) geringer als die Schwellenkühlkapazität ist, und zumindest die Abtaueinheit zu aktivieren, um den Abtauprozess zu starten, wenn als Ergebnis des Vergleichs erfasst wird, dass die durch den dritten Temperatursensor erfasste Temperatur niedriger als die vorbestimmte Temperatur ist.

3. Ein Kühlgerät (1), wie in Anspruch 2 aufgeführt, **ist dadurch gekennzeichnet, dass** die Steuereinheit, die dazu konfiguriert ist, nachdem erfasst wird, dass die Kühlkapazität in dem Frischhaltefach (2) niedriger als die Schwellenkühlkapazität ist und der vom zweiten Temperatursensor (8) erfasste Ist-Temperaturwert des Gefrierfachs (3) niedriger ist als der für das Gefrierfach (3) ermittelte untere Temperaturwert, um den Kompressor (4) zu stoppen und/oder die vom dritten Temperatursensor (8) erfasste Temperatur niedriger als die vorbestimmte Temperatur ist, die seit dem vorherigen Abtauprozess verstrichene Zeit zu berechnen, die berechnete Zeit mit einer darin aufgezeichneten vorbestimmten Schwellenzeit zu vergleichen und zumindest die Abtaueinheit zu aktivieren, um den Abtauprozess zu starten, wenn erfasst wird, dass die Zeit als Ergebnis des Vergleichsprozesses höher ist als die aufgezeichnete Zeit berechnet wurde.

## Revendications

1. Un dispositif de refroidissement (1) **comprenant** au moins un compartiment pour aliments frais (2) où sont stockés des aliments et des boissons ; au moins un compartiment de congélation (3) où sont stockés des aliments par congélation ; au moins un compresseur (4) qui effectue un cycle de refroidissement ; au moins un évaporateur de compartiment pour aliments frais (5) qui refroidit l'intérieur du compartiment pour aliments frais (2) pendant le cycle de refroidissement ; au moins un évaporateur de compartiment de congélation (6) qui refroidit l'intérieur du compartiment de congélation (3) pendant le cycle de refroidissement ; au moins un premier capteur de température (7) qui détecte la température de l'intérieur du compartiment des aliments frais (2) ; au moins un second capteur de température (8) qui détecte la température de l'intérieur du compartiment de congélation (3) ; et au moins une unité de dégivrage connectée à la fois à l'évaporateur du compartiment des aliments frais (5) et à l'évaporateur du compartiment de congélation (6) et qui effectue un processus de dégivrage en éliminant le givre accumulé sur l'évaporateur du compartiment des aliments frais (5) et sur l'évaporateur du compartiment de congélation (6) ;et au moins une unité de commande qui contrôle le cycle de refroidissement et le cycle de dégivrage, **caractérisée par** l'unité de commande qui est configurée pour calculer une capacité de refroidissement en fonction de la baisse de température dans le compartiment des aliments frais après que le compresseur a fonctionné pendant une certaine période de temps et pour comparer la capacité de refroidissement dans le compartiment des aliments frais (2) avec un seuil prédéterminé de capacité de refroidissement à certains intervalles, comparer la température détectée par le second capteur de température (8) avec une valeur de température inférieure déterminée par le producteur pour le compartiment de congélation (3), arrêter le compresseur (4) si la capacité de refroidissement dans le compartiment des aliments frais (2) est inférieure à la capacité de refroidissement seuil à la suite de la comparaison et au moins activer l'unité de dégivrage pour commencer le processus de dégivrage s'il est détecté que la valeur de température détectée par le second capteur de température (8) est inférieure à la valeur de température inférieure déterminée par le producteur pour le compartiment de congélation (3) à la suite de la comparaison.

2. Un dispositif de refroidissement (1) comme dans la déclaration 1, **caractérisé par** au moins un troisième capteur de température pour mesurer la température de l'évaporateur du compartiment des aliments frais (5), et l'unité de commande qui est configurée pour comparer la température détectée par le troisième capteur de température avec une valeur de température prédéterminée après avoir détecté que la capacité de refroidissement dans le compartiment des aliments frais (2) est inférieure à la capacité de refroidissement seuil, et pour activer au moins l'unité de dégivrage pour commencer le processus de dégivrage s'il est détecté que la température détectée par le troisième capteur de température est inférieure à la température prédéterminée à la suite de la comparaison.

3. Un dispositif de refroidissement (1) comme dans la déclaration 2, **caractérisé par** l'unité de commande qui est configurée pour, après qu'il est détecté que la capacité de refroidissement dans le compartiment d'aliments frais (2) est inférieure à la capacité de refroidissement de seuil et la valeur de température réelle du compartiment de congélation (3) détectée par le deuxième capteur de température (8) est inférieure à la valeur de température inférieure déterminée pour le compartiment de congélation (3) pour arrêter le compresseur (4) et/ou la température détectée par le troisième capteur de température (8) est inférieure à la température prédéterminée, calculer le temps écoulé depuis le processus de dégivrage précédent, comparer le temps calculé avec un temps seuil prédéterminé enregistré et au moins activer l'unité de dégivrage pour démarrer le processus de dégivrage s'il est détecté que le temps calculé à la suite du processus de comparaison est supérieur au temps enregistré.
